# EUROPEAN PATENT APPLICATION

(11) **EP 2 017 489 A2**
(43) Date of publication of application: **21.01.2009**
(21) Application number: 08252250.9
(22) Date of filing: 02.07.2008
(51) Int. Cl.: F16D 11/16

(54) **Drive transfer device**

(30) Priority: 18.07.2007 GB 0714035
(71) Applicant: Goodrich Control Systems Ltd, Solihull, West Midlands B90 4LA (GB)
(72) Inventor: Turner, James A., Hemel Hempstead, Herefordshire HP3 8AX (GB); Spitz, Daniel J., London N3 3NE (GB)
(74) Representative: Beck, Simon Antony

(57) **Abstract**

A drive transfer device comprising: a first rotating element (6) having a plurality of apertures (38) therein; a second rotating element (4) adjacent the first rotating element (6); a plurality of transfer elements (10); and a control element (12) mounted for rotation with the first element (6) and moveable with respect to the first element (6) between a first position in which the control element (12) holds the transfer elements in an engaged position where the transfer elements (10) extend through the apertures of the first rotating element to engage with the second rotating element (4) to urge them to rotate together, and a second position where the transfer elements are moved and held out of engagement with the second rotating element.

## Description

### FIELD OF THE INVENTION

The present invention relates to a device for the transfer of rotational drive from a first rotating element to a second rotating element and the selective disconnection of the drive from the first element to the second element.

### BACKGROUND OF THE INVENTION

Drive transfer devices are known which mechanically couple an input drive shaft to an output driven shaft and which allow for disconnection of the drive to occur if a fault condition is detected.

US 2,989,160 discloses a coupling where a driving shaft has a flange which carries a roller cage. The roller cage has a plurality of slots such that drive transfer rollers can be held in the slots and drivingly engage with splines on a driven shaft. A roller ring surrounds the flange and holds additional rollers that hold the drive transfer rollers in a drive transfer position. The roller ring can be moved to a release position where the drive transfer rollers can move outwardly from engagement with the driven shaft under centrifugal force. The rollers are magnetised and are held outwardly from re-engagement with the shaft by magnetic attraction in order to prevent re-engagement of the drive. However the lack of a positive mechanism for holding the drive transfer rollers gives an increased likelihood of false tripping of the transfer/disconnect device. Additionally in a high vibration environment such as might be found in an aeronautical engine/generator environment there is a significant risk that the magnetic attraction holding the drive transfer elements in the disengaged position would fail, resulting in a risk of re-engagement.

US 4,244,456 is similar to US 2,989,160. Rollers 60 are used to provide a driving connection between an outer cage attached to a driven shaft and a flange attached to an inner drive shaft. The rollers are held in driving engagement by a surrounding collar which can be braked by interaction with a radially extending pin 82. This causes relative movement of the collar with respect to the cage allowing the rollers to move out of driving engagement. With this design, however, once tripped, the rollers are thrown clear of the assembly thus ensuring disconnection, but making reconnection very difficult.

### SUMMARY OF THE INVENTION

According to a first aspect of the present invention there is provided a drive transfer device comprising: a first rotating element having a plurality of apertures therein; a second rotating element adjacent the first rotating element; a plurality of transfer elements; and a control element mounted for rotation with the first rotating element and moveable with respect to the first rotating element between a first position in which the control element holds the transfer elements in an engaged position where the transfer elements extend through the apertures of the first rotating element to engage with the second rotating element, and a second position where the control element holds the transfer elements out of engagement with the second rotating element.

The drive transfer elements pivotally engage with bearing regions of the first rotating element. The pivoting motion helps to define the position of each transfer element such that motion of the control element can move the transfer elements to the disengaged position, but also return them to the engaged position. This is a significant advantage as maintenance personnel can easily check that the disengagement mechanism is working, and then easily reset it. Optionally the pivoting motion provides a way of transferring torque between the first and second rotating elements without having a sidewall of the transfer element engaging a sidewall of the apertures in the first rotating element, as friction generated by this contact would resist the movement of the drive transfer elements to the disengaged position. Although friction will occur at the pivoting engagement, its effects in resisting motion of the drive transfer elements are reduced.

However, in a preferred embodiment the drive transfer elements bear against the walls of the apertures in the first rotating element. This gives rise to the possibility of using the friction between the transfer elements and the apertures to provide a minimum torque load that must be exceeded to cause the drive transfer device to trip to the disengaged position. Also having the transfer elements bear against the walls of the apertures in the first rotating element means that the device can also transfer torque from the second rotating element to the first rotating element. This is useful in an aeronautical environment where the first rotating element may be connected to a gas turbine engine and the second rotating element may be connected to an electrical machine which is normally used as a generator, but which can also be used as a starter.

Advantageously the transfer elements mechanically inter-engage with the control element such that the control element moves them out of engagement with the second rotating element. The use of a mechanical connection ensures that disengagement does not rely on centrifugal force overcoming frictional engagement.

In a preferred embodiment of the invention, the first and second rotating elements are shafts which are coaxial and a portion of the second shaft is overlapped by a portion of the first shaft. The second shaft has a plurality of teeth or splines thereon adapted to drivingly engage the transfer elements.

Preferably the first rotating element is an output shaft, and the second rotating element is an input shaft.

Advantageously the control element is coaxially disposed around the first rotating element, and displacement means are provided for displacing the control element with respect to the first rotating element so as to move the transfer elements out of engagement with the second rotating element. Preferably the displacement means provides a torque that causes the control element to be rotationally displaced with respect to the first rotating element when the torque provided by the displacement means exceeds a threshold torque.

Advantageously once disengagement has occurred, the transfer elements are also held out of engagement with the second rotating element until a further torque is applied to the control element during a reset operation. The further torque having an opposite sense to the torque used to cause disengagement, and the further torque exceeding a further torque threshold. Thus the transfer elements can be held out of engagement with the second rotating element until a reset operation is performed.

Preferably the control element is an annular collar which is co-axial with the first and second rotating elements. Preferably the displacement means comprises a brake which is brought into frictional engagement with the control element. A friction brake has the advantage that it is relatively efficient, reliable and light weight. Advantageously the brake is brought into frictional engagement with the control element using an electro-mechanical actuator such as a solenoid. Of course other means may be provided for moving the brake into engagement with the control element, such as mechanical springs or fluid operated actuators. Alternatively, the control element may be formed from, or carry, an electrically conductive material and a braking force is applied to the collar as a consequence of the control element moving through a magnetic field. In one embodiment, the magnetic field is generated by moving a permanent magnet into the vicinity of the control element. The permanent magnet may, for example, be moved into the vicinity of the control element using an activator such a ball-screw drive or a solenoid. Alternatively, the magnetic field may be generated by an electromagnet located in the vicinity of the control element.

### BRIEF DESCRIPTION OF THE DRAWINGS

Preferred embodiments of the invention will be described, by way of non-limiting example only, with reference to the accompanying figures in which:
Figure 1 is a schematic cross-section of a drive transfer device in a drive transfer configuration;
Figure 2 is a perspective cross-section of the drive transfer device of Figure 1 in a drive transfer configuration;
Figure 3 is a perspective view of a transfer element used within the device shown in Figure 1;
Figure 4 is a perspective view of a partially assembled drive transfer device of Figure 1 in a drive transfer configuration;
Figure 5 is an end view of a partially assembled drive transfer device of Figure 1 in a drive transfer configuration;
Figure 6 is an end view of a partially assembled drive transfer device of Figure 1 in a drive disconnect configuration;
Figure 7a is an end view of a control element of the device shown in Figure 1;
Figure 7b is a cross-section of a control element taken on XX of Figure 7a;
Figure 8 is a cross-section of a detent pin located in an end-ring and engaging a control element;
Figure 9 shows an alternative embodiment of the invention;
Figure 10 shows the device in a disconnect configuration; and
Figure 11 is a diagram showing the forces acting on a transfer element.

### DESCRIPTION OF PREFERRED EMBODIMENTS OF THE PRESENT INVENTION

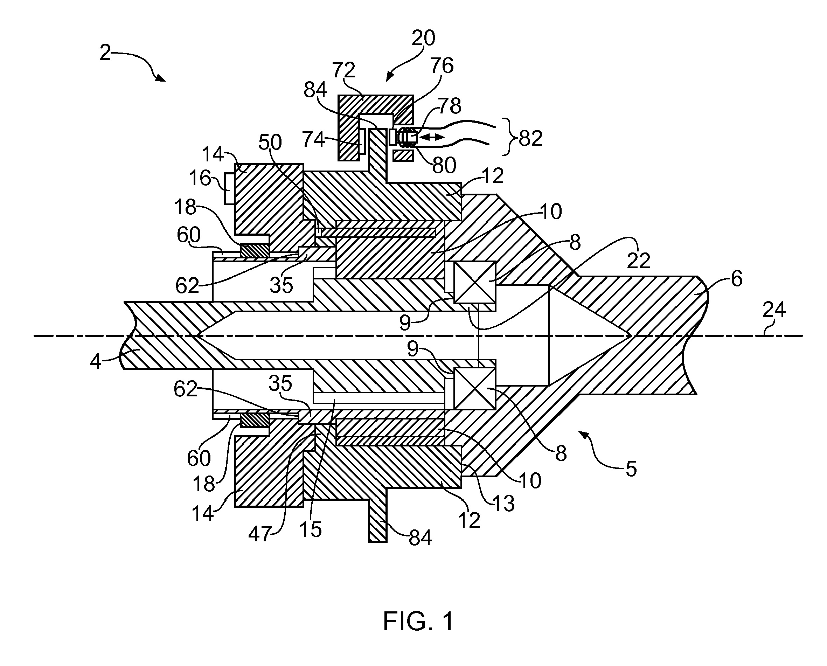

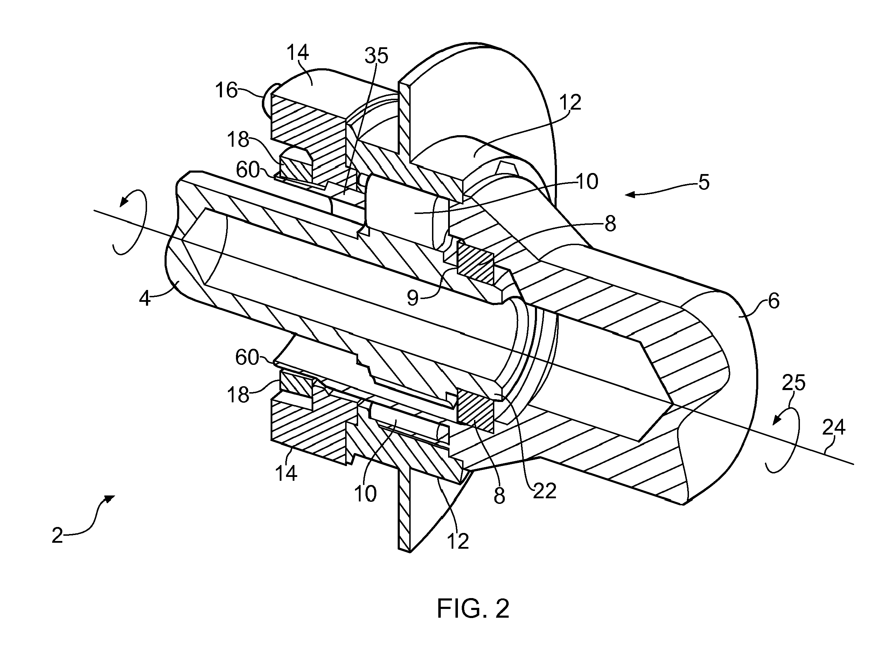

Figures 1 and 2 show a drive transfer device generally designated 2 in a drive transfer configuration in which an input shaft 4 is in driving connection with an output shaft 6. The drive transfer device further comprises a bearing 8, a plurality of transfer elements 10, a control element 12, an end-ring 14, a detent 16, a lock nut 18 and a brake assembly 20. An end 22 of the input shaft 4 is co-axially disposed within an enlarged end portion 5 of the output shaft 6, and is rotatably supported by the bearing 8 within a recess in the enlarged end portion 5. The input shaft 4 has a radial step formed therein which acts as a thrust face 9 which engages with the part of the bearing 8.

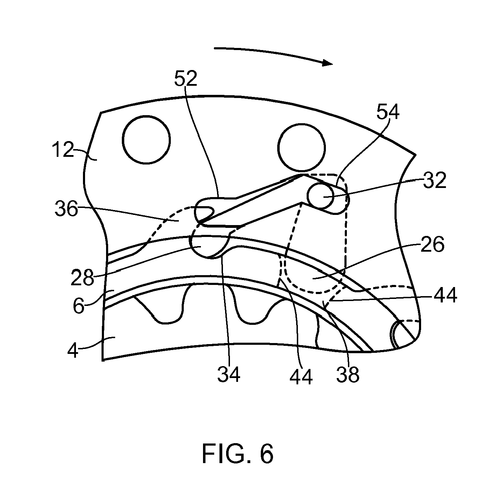

The control element 12 is held around the transfer elements in a recess defined by a radially extending wall 13 formed in the end portion 5 and the end ring 14. The end ring 14 is held in position by a lock nut 18 which engages a tubular wall 35 that extends axially from the end portion 5 of the output shaft, and in particular with a threaded end portion 60 thereof. The tubular wall 35 is provided with a plurality of apertures 38 (Figure 6) through which the transfer elements 10 extend to engage a splined region of the input shaft 4, generally designated 15, which is axially aligned with the transfer elements 10. The output shaft can be regarded as a first rotating element and the input shaft can be regarded as a second rotating element.

The control element 12, the end-ring 14 and the lock-nut 18 are all generally annular and are carried by and co-axial with the output shaft 6.

Figure 2 is a perspective view of the drive transfer device 2 in which the drive transfer device 2 is in the drive transfer configuration and the brake assembly 20 has been omitted for clarity.

In use in the drive transfer configuration, the input shaft 4 rotatably drives the output shaft 6 around an axis 24 in a single direction as shown by arrow 25. In the drive transfer configuration shown in Figures 1 and 2, the transfer elements 10 engage splined region 15 (Figure 1) of the input shaft 4 and, as will be discussed in greater detail later, also bear against the side walls of the apertures 38 (Figure 6) in the tubular wall that extends from the enlarged end portion 5 of the output shaft 6, and thereby transfer the drive from the input shaft 4 to the output shaft 6.

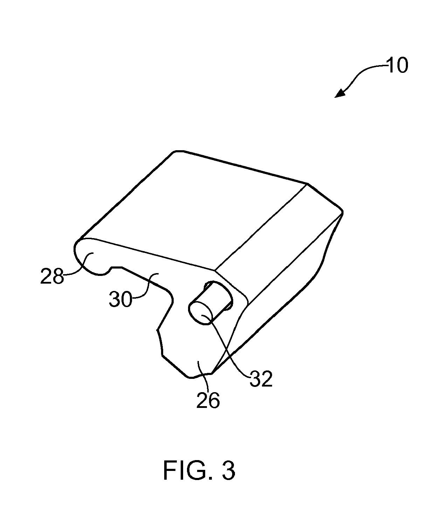

An exemplary transfer element is shown in Figure 3. The transfer element 10 comprises a tooth portion 26 connected to a pivot end portion 28 by an arm 30. A pin 32 extends from an end wall of the tooth portion 26 to engage, in use, a guide slot 50 formed in a flange of the control element 12. The forces acting on the transfer element and the choices of surface angles for the transfer element will be considered in greater detail later.

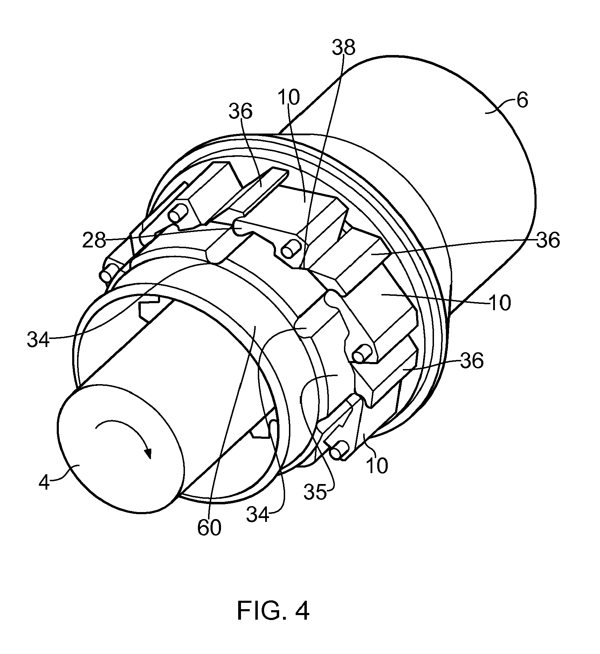

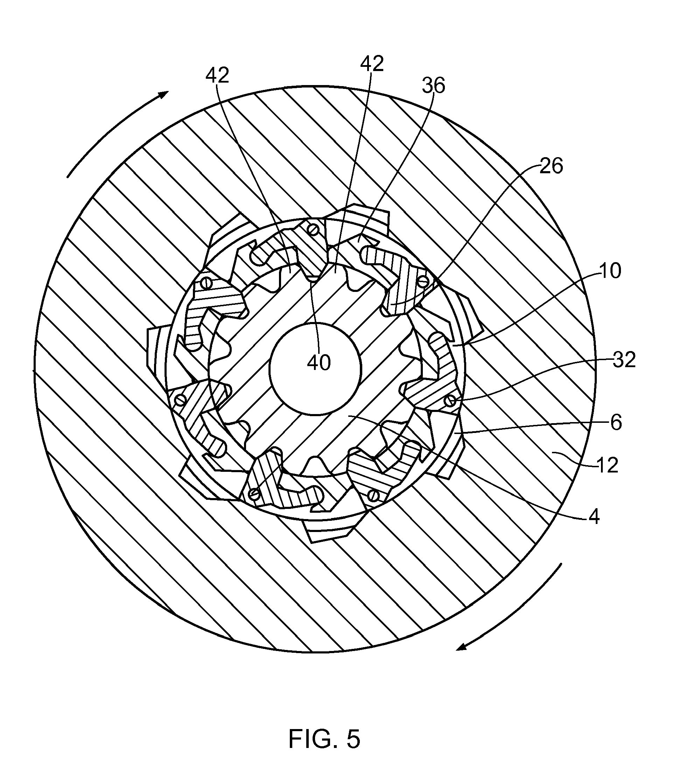

Figures 4 and 5 show the input shaft 4, the output shaft 6 and the transfer elements 10 of a partially assembled drive transfer device in the drive transfer configuration. The transfer elements 10 are carried by the output shaft 6 with the pins 32 of the transfer elements 10 oriented parallel to the axis of the output shaft 6 so that the teeth 26 of the transfer elements are disposed radially inwardly. The pivot end portion 28 of each transfer element 10 engages the output shaft 6 along axial grooves 34 formed in an outer diameter of tubular wall 35 of the output shaft 6. The pivot end portion 28 of each transfer element 10 is retained within the co-operating axial groove 34 of the output shaft 6 by a protrusion 36 which extends outwards from the tubular wall 35 from a position which is adjacent to the co-operating axial groove 34. As noted hereinbefore, in the drive transfer position the tooth portions 26 of the transfer elements 10 extend through apertures 38 in the tubular wall 35 of the end portion 5 of the output shaft 6 and engage with the inter-tooth regions of the input shaft 4. Torque is transferred from the input shaft via the teeth 26 of the transfer elements 10 which engage the splined region 15 of the input shaft 4 and act against the walls of the apertures 38 formed in the wall 35.

Figure 6 shows the interaction between a drive transfer element and the apertures 38 in greater detail. A drive transfer element 10 is shown in the drive disconnect position. In this position, the tooth portion 26 of the element 10 is at least partially retracted through the aperture 38 in the wall 35 that extends to form a tubular end portion of the output shaft 6 and is disengaged from the teeth 42 of the input shaft 4. Each aperture 38 is sized to accommodate the tooth portion 26 of a transfer element 10 with sufficient clearance so that the transfer element 10 can be retracted or inserted through the aperture 38 with minimal engagement between side-walls 44 of the aperture 38 and the tooth portion 26 of the transfer element 10. Hence, during drive disconnection or re-connection, the transfer elements 10 rotate about their respective pivot end portions 28.

The sidewalls of the apertures 38 may be radially extending, or may be slightly inclined such that the width of the aperture increases with increasing distance from the axis of rotation of the shafts. A slight inclination means that once disengagement has started and the teeth portions 26 of the transfer element start to move from the engaged position, the torque acting across the drive transfer device urges the transfer elements 10 to move to the disengaged position.

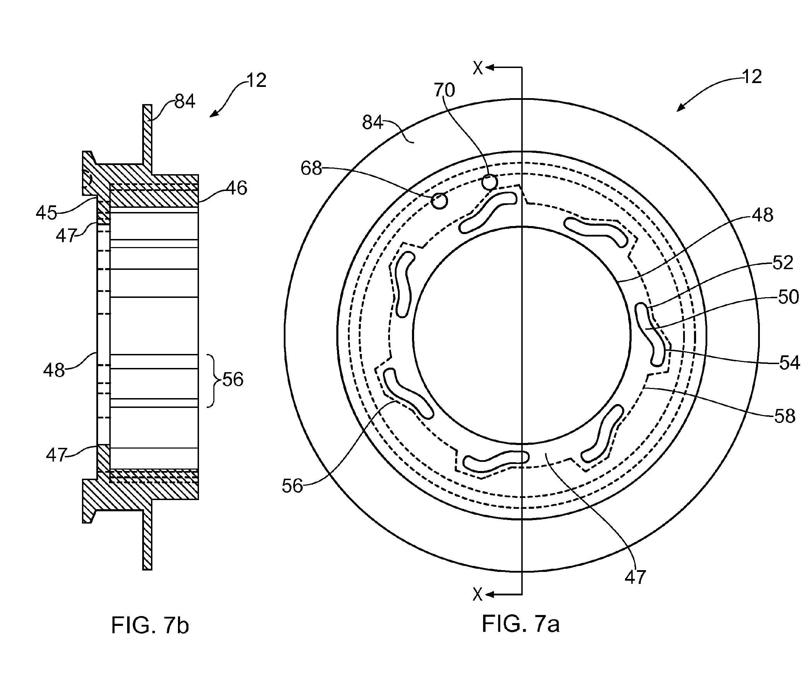

The control element 12 is shown in isolation in Figures 7a and 7b. Figure 7b represents a cross-section taken on XX of Figure 7a. The control element 12 comprises first and second end faces 45 and 46 respectively and has an inwardly extending flange 47 defining an aperture 48 of reduced diameter adjacent to the first face 45. A plurality of slots, generally designated 50 extend axially through the flange 47. Each slot 50 has a radially inward portion 52 and a radially outward portion 54. In the embodiment shown the slots are in the form of a lazy "s" Recesses 56 are also formed in and extend axially along an internal diameter 58 of the control element 12 in positions adjacent the transfer elements such that the transfer elements can move into the recesses 56 when the transfer elements are moved to the disconnect position.

As shown in Figures 1 and 2, the control element 12 is sized such that the flange 47 fits over the wall 35 of the output shaft 6. As indicated most clearly in Figure 1, the output shaft 6 has an externally threaded portion 60 that extends axially from the end of the wall 35 of the output shaft 6. The externally threaded portion 60 and the wall 35 meet at a shoulder 62. The end-ring 14 has an inner diameter that is greater than the outer diameter of the externally threaded portion 60 but less than the diameter of the wall 35. In use, the end-ring 14 fits over the threaded portion 60 and abuts the shoulder 62 of the output shaft 6 so that the control element 12 is axially constrained between the end-ring 14 and the wall 13 of the end portion 5 of the output shaft 6. The lock-nut 18 engages with the externally threaded portion 60 so as to trap and hold the end-ring 14 against the shoulder 62 of the output shaft 6 thus causing the lock-nut 18 and the end-ring 14 to rotate with the output shaft 6.

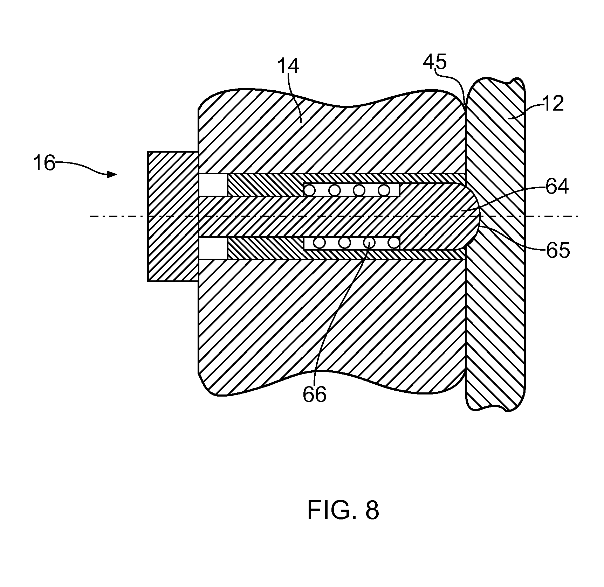

The end-ring 14 further comprises an axially extending through-hole which accommodates the detent 16 which is shown in more detail in Figure 8. The detent has a retractable detent element 64 which is urged by a compression spring 66 towards the control element 12. As shown most clearly in Figure 7a, the control element 12 has, in this example, two indentations 68 and 70 formed in its first face 45 which, in use, is adjacent to and disposed towards a profiled end 65 of the detent element 64 of the detent 16. The indentations 68 and 70 are each shaped so as to receive the end 65 of the detent 16. In use, the end 65 of the detent 16 is urged into engagement with the indentation 68 or 70 by the spring 66, thereby giving rise to a circumferential force that tends to prevent rotation of the control element 12 with respect to the output shaft 6.

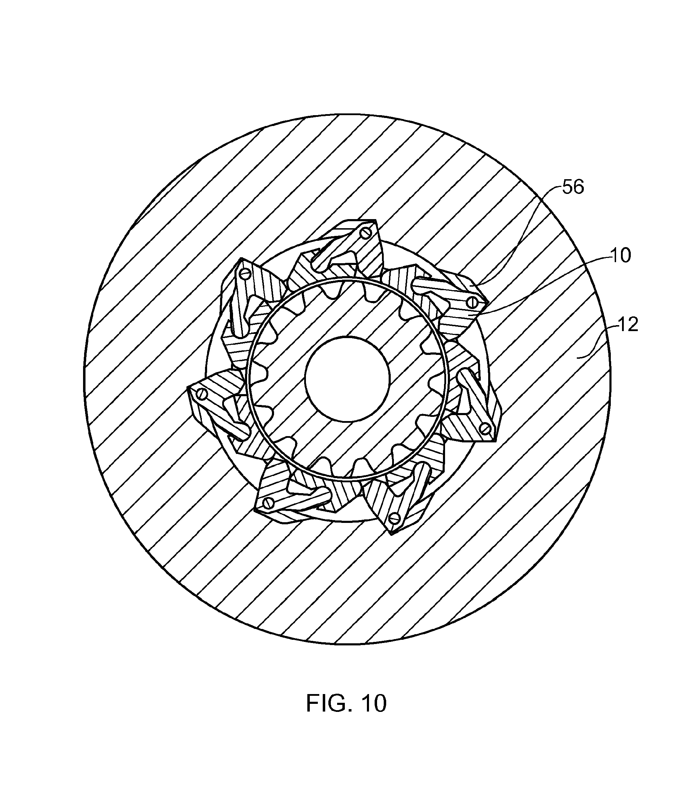

In the drive transfer configuration, the end 65 of the detent element 64 engages the indentation 68, the control element 12 rotates with the output shaft 6 and the pins 32 of the transfer elements 10 extend through the radially inward portions 52 of the slots 50. When the control element 12 is subjected to a braking force of sufficient magnitude to overcome the action of the detent 16, the control element 12 rotates with respect to the output shaft 6 until the pins 32 of the transfer elements 10 extend through the radially outward portions 54 of the slots 50 in the control element 12. This causes the tooth portions 26 of the transfer elements 10 to disengage from the slots 40 in the input shaft 4. In this disengaged position the end 65 of the detent element 64 engages the indentation 70. In addition, the transfer elements 10 are then accommodated in the corresponding recesses 56 formed in the internal diameter 58 of the control element 12. The drive transfer device is then in the drive disconnect configuration shown in Figure 6, and any unintentional re-engagement of the transfer elements 10 with the input shaft 4 is prevented by engagement of the detent with the indentation 70. For completeness Figure 10 corresponds to the same cross-section as Figure 5, but shows the drive transfer device in the disconnected position. It clearly shows how the transfer elements move partially into the recesses 56 such that the tooth of the transfer element disengages with the splines of the input shaft. Any subsequent re-engagement between the transfer elements 10 and the input shaft 4 is prevented irrespective of the speed of rotation of the input shaft or the output shaft, and irrespective of environmental changes such as temperature or vibration of the drive transfer device 2. Once in the drive disconnect configuration, the output shaft 6 may only be reconnected to the input shaft 4 during a reset operation whereby a rotational force is applied to the control element 12 having a magnitude sufficient to overcome the circumferential detent force (or the detent is manually released) and in a direction opposite to the sense of the braking force applied to the control element 12 for drive disconnection. Such a reset force causes the control element 12 to rotate back to the drive transfer position until the end 64 of the detent pin 16 engages the indentation 68 once again. Thus the teeth 26 of the transfer elements 10 can re-engage the slots 40 between the splines 42 of the input shaft 4, provided the shafts are correctly orientated with respect to one another.

The brake assembly 20 shown in Figure 1 is a solenoid-actuated disc-brake and comprises a support 72, a fixed brake pad 74, a floating brake pad 76, a solenoid element 78, solenoid windings 80, and power supply cables 82 for carrying an electric current to the solenoid windings 80. The floating brake pad 76 is attached to the solenoid element 78. In use, an electric current is passed through the solenoid windings 80 to urge the element 78 towards a disc-like flange 84 of the control element 12 until the brake pads 74 and 76 are brought into frictional engagement with the flange 84 and the control element 12 is subjected to a braking force. It should be noted that brake assemblies other than the disk brake assembly 20 shown in Figure 1 can also be used. The flange 84 may, for example, be omitted and a brake shoe may be applied radially to the surface of the control element 12 to provide a braking force. Such a brake shoe may, for example, be solenoid-operated or spring-loaded and solenoid released.

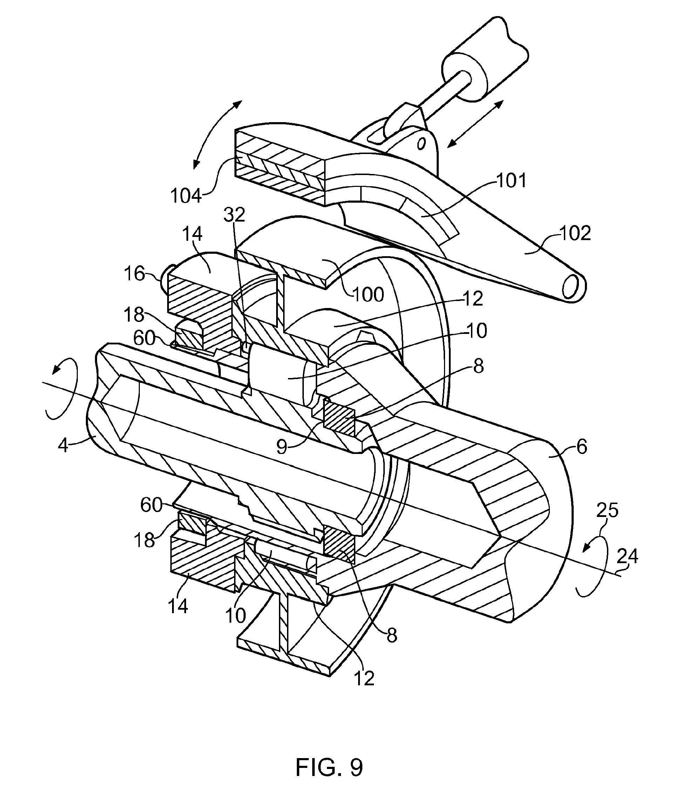

Alternatively, the flange 84 of the control element 12 may be formed from an electrically conductive material and be surrounded by a magnet assembly. Figure 9 shows a modification where the control element has a circular outer wall 100 carried by the flange 84. A magnet 101 is carried on a pivoting arm 102. A back iron 104 may be provided to enhance the field strength of the magnet. The arm 102 can be formed of any suitable material, for example aluminium. The back iron 104 is preferably a ferrous material and the magnets 100 are preferably rare - earth magnets. The arm can be moved towards and away from the wall 100 by an actuator, which might for example be a ball screw device. Such an actuator provides good positional control of the magnet 101. In such an embodiment, rotation of the flange 84 and wall 100 through a magnetic field generated by the magnet 101 induces eddy currents within the wall 100 which, in turn, give rise to a braking force. Alternatively the magnet assembly may, for example, be an electromagnet and the braking force is applied when an electric current is passed through the windings of the electromagnet.

All of the embodiments of the drive transfer device described herein have seven transfer elements 10. It should be understood, however, that the number of transfer elements 10 is not, in general, limited to seven and that in general, there should be at least two transfer elements which are uniformly distributed around a circumference of the output shaft 6 to maintain the balance of the output shaft 6 during rotation.

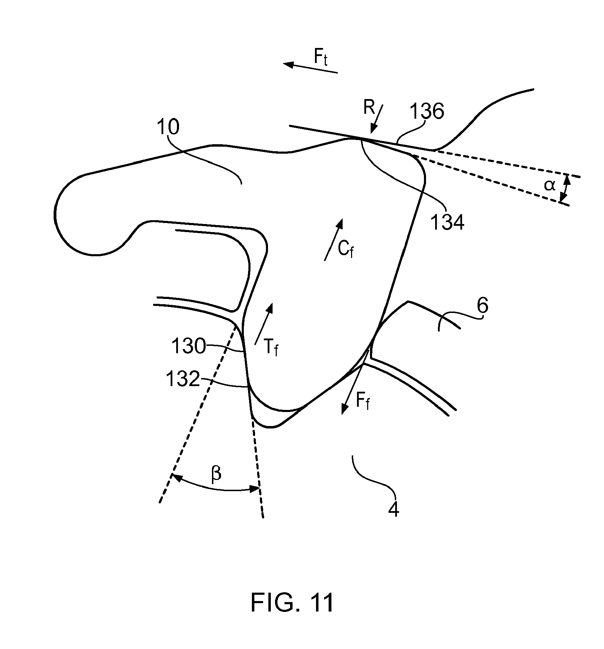

The designer can choose whether the drive load is primarily borne at the pivot of the transfer element 10, or by engagement with the wall of the aperture 38 in the output element. The latter choice has the advantage of reducing the forces acting in the arm 30 of the transfer element 10. Such an arrangement is shown in detail in Figure 11.

The end of the transfer element 10 has an inclined wall 130 which engages with a similarly inclined wall 132 which partially defines the spline within the input shaft 4. The wall 132 is inclined to a local radial line by an angle β, which in a preferred embodiment of the invention is 30°. It will be noted that, ignoring friction, this gives rise to a radially directed force T_{f} which urges the transfer element out of engagement.

When the edge of transfer element bears against the walls of the apertures in the output shaft 6 it gives rise to a frictional force F_{f} which tends to resist motion of the transfer element.

Additionally when the drive transfer device is rotating at high speed a centrifugal force C_{f} acts to urge the transfer element to move in a radial direction of engagement.

The generally radial forces C_{f} and T_{f} are reacted against by a reaction force R as a result of contact between the inner surface of the control element 12 overlying a radially outward most portion 134 of the transfer element 10. High speeds and/or transmission of large torque loads may result in the reaction force becoming quite large. This gives rise to a frictional force which can resist relative motion between the control element 12 and the output shaft. This can be overcome by using a larger braking force, but this in turn requires a larger and heavier brake.

However, the effects of friction can be mitigated by modifying the contact surfaces between the drive transfer element 10 and the control element 12 such that a slightly angled profile is formed which imparts a tangential force Fₜ on the control element 12 which urges it to rotate in the disconnect direction. The force Fₜ can be tailored by suitable selection of an angle of inclination α of the inner surface 136 of the control element away from the tangential direction such that the tangential force Fₜ substantially balances the friction resulting from the reaction force R over a desired range of speeds and loads. In fact the device could be made "self tripping" at a preset torque/speed combination.

The selection of the angle α depends on materials, surface finishes, loads and speeds, but in a preferred embodiment is around 8°.

It is thus possible to provide a drive transfer and disconnect device in which transfer elements are positively held in position when it is desired to transfer drive between two shafts, and positively moved and held out of engagement when it is desired to remove drive.

In use, the transfer and disconnect device may be used to connect a generator to a prime mover. The disconnection can be electrically initiated if a fault occurs in the generator. The fault may be detected as a rise in temperature resulting from increased frictional heating. If the generator is a starter-generator the drive transfer and disconnect device allows a starting torque to be applied to the prime mover.

## Claims

1. A drive transfer device comprising:
a first rotating element (6) having a plurality of apertures (38) therein;
a second rotating element (4) adjacent the first rotating element (6);
a plurality of transfer elements (10); and
**characterised by** a control element (12) mounted for rotation with the first rotating element (6) and moveable with respect to the first rotating element between a first position in which the control element (12) holds the transfer elements (10) in an engaged position where the transfer elements extend through the apertures of the first rotating element to engage with the second rotating element (4), and a second position where the transfer elements are moved and held out of engagement with the second rotating element.

2. A drive transfer device as claimed in claim 1, **characterised in that** the transfer elements (10) pivotally engage with the first rotating element (6).

3. A drive transfer device as claimed in claim 1 or 2, **characterised in that** the control element (12) engages with the transfer elements (10) to mechanically move them out of engagement with the second rotating element (4).

4. A drive transfer device as claimed in claim 3, **characterised in that** the control element (12) has at least one control surface (50) which co-operates with a mating portion (32) of the transfer elements (10) to hold the transfer elements in a position determined by the relative position of the control element (12) with respect to the first rotating element (6).

5. A drive transfer device as claimed in any of the preceding claims, **characterised in that** the first and second rotating elements are first and second shafts, and in which the first and second shafts are coaxially disposed, with a portion of the second shaft being overlapped by the first shaft.

6. A drive transfer device as claimed in claim 5, **characterised in that** the second shaft has a plurality of teeth thereon adapted to drivingly engage with the transfer elements.

7. A drive transfer device as claimed in any of claims 5 or 6, **characterised in that** the control element (12) is coaxially disposed around the first rotating element (6), and a displacement device (20) is provided for displacing the control with respect to the first rotating element so as to move the transfer elements out of engagement with the second rotating element.

8. A drive transfer device as claimed in claim 7, **characterised in that** the displacement device provides a torque that acts on the control element to cause rotational displacement with respect to the first rotating element.

9. A drive transfer device as claimed in claim 7 or 8, **characterised in that** the displacement device comprises a magnetic or an electromagnetic brake.

10. A drive transfer device as claimed in claim 9, in which the displacement device comprises a permanent magnet movable by an actuator.

11. A drive transfer device as claimed in 7 or 8, in which the displacement device comprises a mechanical brake.

12. A drive transfer device as claimed in any of the preceding claims, in which the control element has an inner surface (136) which is angled such that the control element is urged to move in a disconnect direction in response to the drive transfer elements exerting an outwardly directed radial load against the inner surface.

13. A drive transfer device as claimed in any of the preceding claims, in combination with a generator or a prime mover.

14. A drive transfer device as claimed in any of the preceding claims, further including a retaining device for retaining the control element at the second position.

15. A drive transfer device as claimed in any of the preceding claims in which the second rotating element is a driving shaft in connection with a prime mover.
